Europäisches Patentamt

European Patent Office

Office européen des brevets

(11) Veröffentlichungsnummer: **0 288 727**

**A1**

(12) **EUROPÄISCHE PATENTANMELDUNG**

(21) Anmeldenummer: 88104313.7

(22) Anmeldetag: 18.03.88

(51) Int. Cl.4: **A01K 39/01**

(30) Priorität: 29.04.87 DE 3714236
28.05.87 DE 3718057

(43) Veröffentlichungstag der Anmeldung:
02.11.88 Patentblatt 88/44

(84) Benannte Vertragsstaaten:
AT BE CH DE ES FR GB GR IT LI LU NL SE

(71) Anmelder: **Effem GmbH**
**Eitzer Landstrasse**
**D-2810 Verden/Aller(DE)**

(72) Erfinder: **Tönne, Jürgen, Dr.**
**Am Eversberg 4**
**D-2816 Kirchlinteln/Luttum(DE)**
Erfinder: **Saric, Kruno, Dr.**
**Roggenkamp 17**
**D-2810 Verden/Aller(DE)**
Erfinder: **Weis,Telse**
**Obere Strasse 1**
**D-2816 Kirchlinteln(DE)**
Erfinder: **Meyer, Bernd**
**Diestelkampsweg 60**
**D-2800 Bremen 33(DE)**

(74) Vertreter: **Goddar, Heinz J., Dr. et al**
**FORRESTER & BOEHMERT**
**Widenmayerstrasse 4/I**
**D-8000 München 22(DE)**

(54) **Vogelfutterstange.**

(57) Vogefutterstange mit einem das durch ein Bindemittel zusammengehaltene, im wesentlichen in Form eines Kolbens ausgebildete Futtermittel tragenden, axial durch diesen verlaufenden, mit einem Aufhängehaken versehenen Stab, wobei das Futtermittel in Form einer Vielzahl von Einzelkörpern (10), insbesondere in Form eines Würfels, eines Zylinders, einer Kugel, einer Tonne oder dergleichen, ausgebildet ist, die jeweils mit einer zentralen Ausnehmung (12) versehen und auf den Stab (14) aufgesteckt sind.

Fig.1

EP 0 288 727 A1

## Vogelfutterstange

Die Erfindung betrifft eine Vogelfutterstange mit einem das durch ein Bindemittel zusammengehaltene, im wesentlichen in Form eines Kolbens ausgebildete Futtermittel tragenden, axial durch diesen verlaufenden, mit einem Aufhängehaken versehenen Stab.

Eine derartige Vogelfutterstange ist aus dem DE-GM 82 34 546 bekannt. Dabei ist der mit einer Mehrzahl von Einbuchtungen versehene Futtermittelkörper einstückig ausgebildet, der gesamte Futterkörper besteht lediglich aus einer über die Länge der Vogelfutterstange gleichbleibenden Zusammensetzung von Futterkörnern.

Der Erfindung liegt die Aufgabe zugrunde, eine Vogel futterstange zu schaffen, bei der die Zusammensetzung des Futtermittels über die Länge der Stange unterschiedlich ist.

Erfindungsgemäß wird diese Aufgabe dadurch gelöst, daß das Futtermittel in Form einer Vielzahl von Einzelkörpern, insbesondere in Form eines Würfels, eines Zylinders, einer Kugel, einer Tonne oder dergleichen, ausgebildet ist, die jeweils mit einer zentralen Ausnehmung versehen und auf den Stab aufgesteckt sind.

Dabei kann vorgesehen sein, daß mindestens zwei der auf den Stab aufgesteckten Körper unterschiedliche Zusammensetzung haben.

Besonders bevorzugte Ausführungsformen der Erfindung sind Gegenstand der Unteransprüche.

Die erfindungsgemäße Vogelfutterstange kann im übrigen natürlich nicht nur vertikal aufgehängt werden, vielmehr liegt es im Rahmen des Erfindungsgedankens, die Vogelfutterstange, unter entsprechender Modifizierung dann an ihren beiden Enden vorgesehener Aufhängugseinrichtungen, horizontal anzuordnen, wobei der Stab dann die einzelnen Futtermittelkörper nicht mehr im wesentlichen mittig durchsetzt, sondern im Aufhängezustand unterhalb der einzelnen Futtermittelkörper verlaufen kann, die auf von dem Stab jeweils zinkenartig nach oben vorstehende Einzelstifte aufgesteckt sind.

Weitere Merkmale und Vorteile der Erfindung ergeben sich aus den Ansprüche und aus der Beschreibung, in der Ausführungsbeispiele der erfindungsgemäßen Vogelfutterstange anhand einer Zeichnung erläutert ist. Dabei zeigt:

Fig. 1 ein erstes Ausführungsbeispiel, teilweise im Schnitt;

Fig. 2 ein zweites Ausführungsbeispiel, teilweise im Schnitt; und

Fig. 3 ein weiteres Ausführungsbeispiel der Erfindung, ebenfalls teilweise im Schnitt.

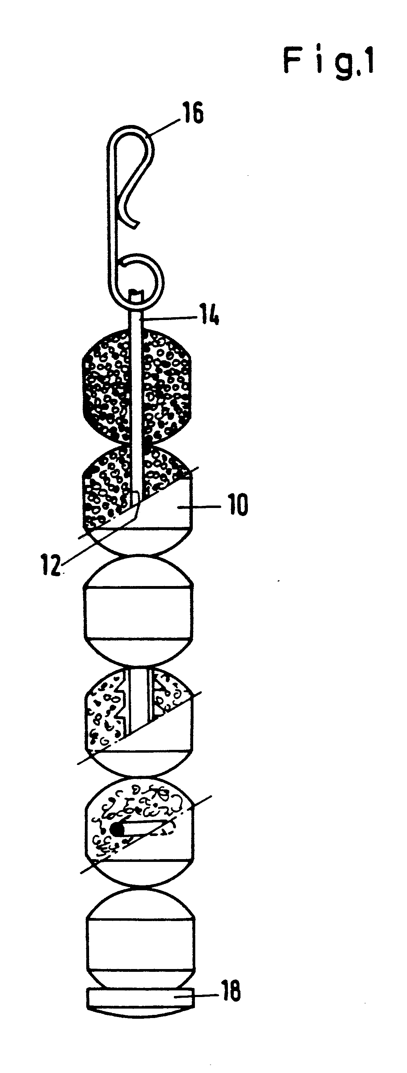

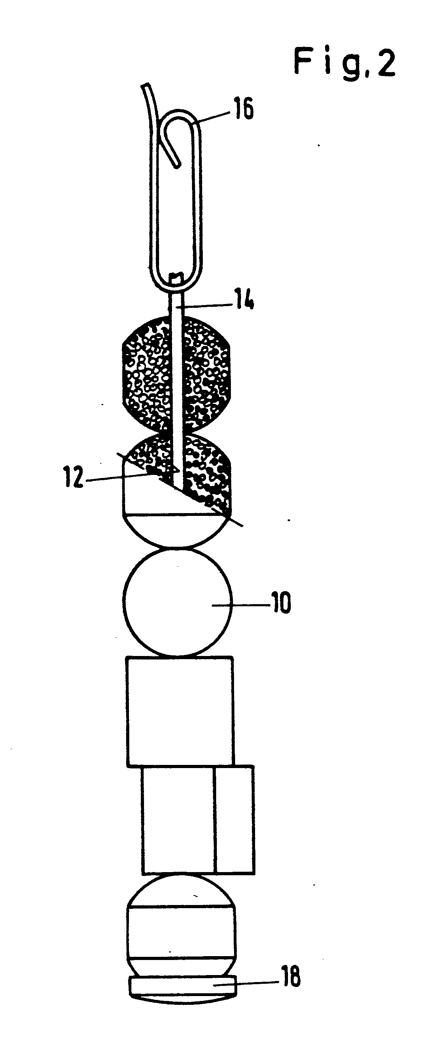

Die Futtermittelstange besteht aus einem mit einem Aufhängehaken 16 versehenen Stab 14, auf den eine Vielzahl von mit einer zentralen Ausnehmung 12 versehenen Futtermittelkörper 10 einzeln und lose aufgesteckt sind. Bei dem in Figur 1 gezeigten Ausführungsbeispiel sind die Körper 10 tonnig ausgebildet, bei dem in figur 2 gezeigten Ausführungsbeispiel ist einer der Körper in Form einer abgeflachten Kugel, ein anderer als Zylinder und ein dritter als Würfel ausgebildet.

Dabei können die einzelnen Körper 10 aus durch Bindemittel zusamengehaltenem Futtermittel unterschiedlicher Art bestehen. Dabei kann es sich sowohl um körniges Material verschiedener Zusammensetzung, als auch um nicht-körniges Material handeln. So ist es möglich für einzelne Körper 10 ein geformtes oder gepreßtes halbfeuchtes Futtermittel, das bis zu 25 % Feuchte enthalten kann, zu verwenden. Dabei kann dieses halbfeuchte Produkt eine artgerechte Mischung von tierischen und pflanzlichen Proteinen, Fetten Kohlenhydraten, Mineralstoffen, Spurenelementen und/oder Vitaminen darstellen. Diese Mischungen können individuell auf die jeweilige Vogelart und/oder bestimmte Lebensphasen dieser Vogelarten, z.B. auf die Mauserzeit bei Wellensittichen, abgestimmt sein. Um die mikrobielle Stabilität des halbfeuchten Futtermittels zu gewährleisten, können beispielsweise bis zu 3 Gew.-% Sorbit und bis zu 0,3 Gew.-% Kaliumsorbat eingearbeitet werden.

Die Einarbeitung von Farbstoffen, insbesondere Naturfarbstoffen, wie z.B. Rote-Beete-Saft, Karottensaft usw., hat nicht nur eine ästhetische Wirkung, sondern kann auch die Gefiederfarbe des Vogels direkt positiv beeinflussen. Weiter kann vorgesehen sein, daß wenigstens einer der Körper 10 nicht aus einem Futtermittel besteht, sondern als Wetzstein ausgebildet ist, an dem sich der Vogel seinen Schnabel wetzen kann.

Die Futtermittelstange ist an ihrem unteren, dem Aufhängehaken 16 abgewandten Ende mit einer auf diese aufgeschraubten oder gepreßten Abschlußplatte 18 versehen.

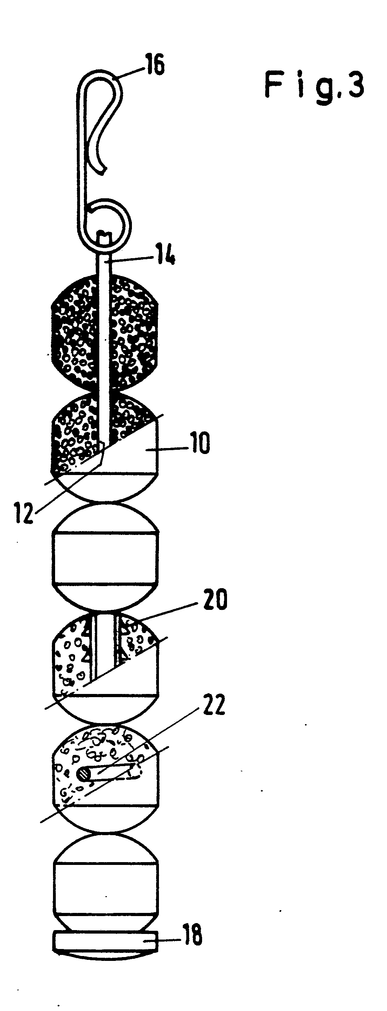

Wie aus Fig. 3 zu erkennen ist, sind bei dem dort gezeigten Ausführungsbeispiel im, von unten gesehen, drittletzten Einzelkörper 10 eine Stabilisierungshülse 20 mit Widerhaken für das Futtermittel und in dem, von unten gesehen, zweituntersten Einzelkörper 10 ein Stabilisierungsring 22 aus Metall oder Kunststoff zur Futterkörperstabilisierung vorgesehen. Die Stabilisierungshülse 20 hat den Vorteil, daß beim Abfressen des entsprechenden Futtermittels die schaschlikartig aufeinander gestapelten Einzelkörper 10 nicht zusammenrutschen. Der Stabilisierungsring 22 gewährleistet insgesamt einen verbesserten Zusammenhalt des Futtermittels. Der in der Zeichnung wiedergegebene Stab 12 könnte auch bspw. horizontal aufgehängt werden, unter entsprechender Modifizierung der Aufhängeeinrichtung, die dann an beiden Enden vorhanden sein müßten, wobei die Einzelkörper 10 dann nicht von dem Stab durchsetzt wären, sondern dieser als langgestreckte, horizontale Stütze unterhalb der Einzelkörper 10 verliefe, wobei die Einzelkörper 10 auf nach oben vorstehende Einzelzinken aufgesteckt wären. Auch dies liegt innerhalb des Erfindungsgedankens.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

Bezugszeichenliste

| 10 | Körper |
| 12 | Ausnehmung |
| 14 | Stab |
| 16 | Aufhängehaken |
| 18 | Abschußplatte |
| 20 | Stabilisierungshülse |
| 22 | Stabilisierungsring |

**Ansprüche**

1. Vogelfutterstange mit einem das durch ein Bindemittel zusammengehaltene, im wesentlichen in Form eines Kolbens ausgebildete Futtermittel tragenden, axial durch diesen verlaufenden, mit einem Aufhängehaken versehenen Stab, dadurch gekennzeichnet, daß das Futtermittel in Form einer Vielzahl von Einzelkörpern (10), insbesondere in Form eines Würfels, eines Zylinders, einer Kugel, einer Tonne oder dergleichen, ausgebildet ist, die jeweils mit einer zentralen Ausnehmung (12) versehen und auf den Stab (14) aufgesteckt sind.

2. Vogelfutterstange nach Anspruch 1, dadurch gekennzeichnet, daß mindestens zwei der auf den Stab (14) aufgesteckten Körper (10) unterschiedliche Zusammensetzung haben.

3. Vogelfutterstange nach Anspruch 2, dadurch gekennzeichnet, daß mindestens einer der auf den Stab (14) aufgesteckten Körper (10) aus nicht-körnigem Futtermittel besteht.

4. Vogelfutterstange nach Anspruch 3, dadurch gekennzeichnet, daß das nicht-körnige Futtermittel ein halbfeuchtes Produkt mit bis zu 25 % Feuchte ist.

5. Vogelfutterstange nach Anspruch 3 oder 4, dadurch gekennzeichnet, daß das nicht-körnige Futtermittel mikrobiell stabilisiert ist.

6. Vogelfutterstange nach Anspruch 5, dadurch gekennzeichnet, daß dem nicht-körnigen Futtermittel bis zu 3 Gew.-% Sorbit und bis zu 0,3 Gew.-% Kaliumsorbat zugesetzt sind.

7. Vogelfutterstange nach einem der vorangehenden Ansprüche, dadurch gekennzeichnet, daß dem Futtermittel mindestens ein Farbstoff zugesetzt ist.

8. Vogelfutterstange nach Anspruch 7, dadurch gekennzeichnet, daß der Farbstoff ein Naturfarbstoff ist.

9. Vogelfutterstange nach einem der Ansprüche 2 - 8, dadurch gekennzeichnet, daß mindestens einer der auf den Stab (14) aufgesteckten Körper (10) als Wetzstein ausgebildet ist.

10. Vogelfutterstange nach einem der vorangehenden Ansprüche, gekennzeichnet durch eine auf das untere und damit dem Aufhängehaken (16) gegenüberliegende Endstück des Stabes (14) aufgepreßte oder aufgeschraubte Abschlußplatte (18).

11. Vogelfutterstange nach einem der vorangehenden Ansprüche, dadurch gekennzeichnet, daß mindestens einer der Einzelkörper (10) eine vorzugsweise von dem Futtermittel allseitig umgebene Stabilisierungseinrichtung (20, 22) aufweist.

12. Vogelfutterstange nach Anspruch 11, dadurch gekennzeichnet, daß die Stabilisierungseinrichtung eine im wesentlichen konzentrisch den Stab (14) umfassende Stabilisierungshülse (20) aufweist.

13. Vogelfutterstange nach Anspruch 12, dadurch gekennzeichnet, daß die Stabilisierungshülse (20) mit Widerhaken od. dgl. zur Verbesserung der Haftung des Futtermittels versehen ist.

14. Vogelfutterstange nach einem der Ansprüche 11 bis 13, dadurch gekennzeichnet, daß die Stabilisierungseinrichtung einen mit im wesentlichen senkrecht zur Achse des Stabes (14) liegender Ebene angeordneten Stabilisierungsring (22) aufweist, dessen Innendurchmesser vorzugsweise wesentlich größer ist als der Außendurchmesser des Stabes (14).

15. Vogelfutterstange nach Anspruch 14, dadurch gekennzeichnet, daß der Stabilisierungsring (22) aus Metall besteht.

16. Vogelfutterstange nach Anspruch 14, dadurch gekennzeichnet, daß der Stabilisierungsring (22) aus Kunststoff besteht.

# Fig.1

# Fig. 2

Fig.3

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-U-7 923 748  (M. BOCK)<br>* Ansprüche; Figuren * | 1 | A 01 K  39/01 |
| A |  | 3,4 | |
| | --- | | |
| Y | DE-U-7 430 340  (P. PINTER GMBH)<br>* Seite 2, 2. Absatz, Zeilen 7-9;<br>Ansprüche; Figuren * | 1 | |
| A |  | 10 | |
| | --- | | |
| Y | US-A-2 306 312  (D.B. HYDE)<br>* Figuren * | 1 | |
| A |  | 2 | |
| | --- | | |
| A | DE-A-3 338 076  (DR. IMMEYER GMBH)<br>* Seiten 5-7 * | 1,6 | |
| | ----- | | |

RECHERCHIERTE SACHGEBIETE (Int. Cl.4)

A 01 K  39/00

Der vorliegende Recherchenbericht wurde für alle Patentansprüche erstellt

| Recherchenort | Abschlußdatum der Recherche | Prüfer |
|---|---|---|
| BERLIN | 25-07-1988 | WUNDERLICH J E |